# EUROPÄISCHE PATENTSCHRIFT

(11) **EP 0 629 530 B1**
(45) Veröffentlichungstag und Bekanntmachung des Hinweises auf die Patenterteilung: **11.02.1998**
(21) Anmeldenummer: 94106554.2
(22) Anmeldetag: 27.04.1994
(51) Int. Cl.: B60R 22/34, A44B 11/06

(54) **Zentralversteller**
Central adjuster
Régleur central

(30) Priorität: 16.06.1993 DE 4319889
(43) Veröffentlichungstag der Anmeldung: 21.12.1994
(73) Patentinhaber: VAN RIESEN GmbH + CO, D-32130 Enger (DE)
(72) Erfinder: Schmelow, Harald, D-24629 Kisdorf (DE)
(74) Vertreter: Vollmann, Heiko, Dipl.-Ing.

(56) Entgegenhaltungen:
- US-A- 3 439 932
- US-A- 3 442 529

## Beschreibung

Die Erfindung betrifft eine Vorrichtung zum verstellbaren Festlegen eines Gurtbandes, insbesondere einen Zentralversteller für ein Gurtbandrückhaltesystem, mit einem zur ortsfesten Anbringung vorgesehenen Grundkörper, an dessen einer Seite das festzulegende Gurtband einläuft und an dessen davon abgewandter Gegenseite ein freies Gurtbandende ausläuft, und mit einer innerhalb des Grundkörpers angeordneten Klemmeinrichtung zum Festlegen des Gurtbandes.

Derartige Vorrichtungen werden zum Befestigen und Sichern von Menschen, Tieren und Gegenständen zahlreich eingesetzt, insbesondere auch in Gurtbandrückhaltesystemen von Kindersitzen für Kraftfahrzeuge. Es zählt zum Stand der Technik bei Gurtbandrückhaltesystemen für Kindersitze, die ihrerseits mit dem im Kraftfahrzeug befindlichen Gurtbandrückhaltesystem gesichert werden, zwei Schultergurte sowie einen Beckengurt mit einem zentralen Gurtschloß zu verbinden. Um das Gurtbandrückhaltesystem an die Größe des zu sichernden Kindes anzupassen, sind Gurtbandversteller an den Schultergurten sowie am Beckengurt vorzusehen und einzustellen, was als aufwendig empfunden wird. Es sind daher Gurtbandrückhaltesysteme entwickelt worden, bei denen die Schultergurte über eine Umlenkung in den Beckengurt übergehen. Dann sind die Schultergurte rückseitig der Sitzschale über einen Gurtverteiler in einen gemeinsamen Gurt überführt, der im unteren Bereich der Sitzschale befestigbar ist. In diesem Bereich ist dann ein von vorne zugänglicher Zentralversteller angeordnet, so daß die Anpassung der Gurtbandlänge sowohl von Schulter- als auch von Beckengurten mit nur einem Versteller möglich ist.

Bei einem solchen in der Regel an der Sitzschale befestigten Zentralversteller wird beim Stand der Technik auf die an sich bekannten Umlenkungen des Gurtbandes innerhalb des Zentralverstellers verzichtet, da das Gurtband auf Grund der schon vorhandenen zahlreichen Umlenkungen ohnehin schon mit erhöhter Reibung behaftet ist und andernfalls eine leichte Verstellbarkeit nicht mehr gegeben wäre. Solche Zentralversteller nach dem Stand der Technik sind daher einfachst ausgebildet und bestehen im wesentlichen nur aus einer Klemmeinrichtung, die jedoch so ausgelegt ist, daß die Klemmwirkung weniger durch erhöhte Reibung infolge von Umschlingungen, sondern vielmehr durch mechanischen Eingriff in das Gurtband selbst, beispielsweise durch entsprechend rauhe Oberflächen und mechanischen Druck erreicht wird. Solche Klemmeinrichtungen schädigen das Gurtband irreversibel und führen daher zu einem vorzeitigen Gurtbandverschleiß.

Neben diesen unerwünschten Verschleißerscheinungen stellt sich bei solchen Verstellern häufig auch das Problem des Mikroschlupfes. Bekanntermaßen wird ein guter Schutz durch das Gurtbandrückhaltesystem nur dann erreicht, wenn das Gurtband möglichst eng am Körper anliegt. Ein sich im Sitz bewegendes Kind bewirkt jedoch eine sich ständig wiederholende Be- und Entlastung des Gurtbandes, was dazu führen kann, daß dieses in wenn auch sehr kleinen Schritten peu à peu durch den Versteller wandert. Dies gilt es zuverlässig zu vermeiden.

Darüberhinaus ist aus US-A-3,439,932 eine Blockiervorrichtung für den Dreipunktgurt eines Kraftfahrzeuges bekannt. Die dort beschriebene Blockiervorrichtung hat gravierende Nachteile, die deren Anwendung beim heutigen Stand der Technik ausschließt. So ist sie nur lageabhängig funktionsfähig, d. h. insbesondere für Aufsatzkindersitze, die auf Sitzlehnen unterschiedlicher Neigung befestigt und in unterschiedlichen Winkeln schräggestellt werden, nicht einsetzbar. Darüberhinaus ist durch die kombinierte Rollenanordnung mit federkraftvorgespannter Pendelauslösung und Gewichtskraftspannung nicht nur bauaufwendig, sondern beansprucht auch ein Bauvolumen, das heutzutage weder in Fahrzeugsitzen und noch viel weniger in Kindersitzen zur Verfügung steht. Ein weiterer wesentlicher Nachteil insbesondere bei der Verwendung in Verbindung mit Rückhaltesystemen für Kindersitze ist darin zu sehen, daß eine Verriegelung des darin geführten Gurtbandes nur im Falle eines Aufpralles oder einer abrupten Lageänderung des damit wirkverbundenen Pendels entsteht, nicht jedoch in unbelastetem Zustand. Gerade jedoch bei Kindersitzen ist es erforderlich, daß der Gurt auch in unbelastetem Zustand so eng wie möglich am Körper des Kindes anliegt, um eine optimale Sicherungsfunktion übernehmen zu können.

Ausgehend von der eingangs geschilderten Problematik liegt der vorliegenden Erfindung die Aufgabe zugrunde, eine gattungsgemäße Vorrichtung so auszubilden, daß einerseits eine schnelle und einfache Verstellbarkeit des durchlaufenden Gurtbandes ermöglicht wird, andererseits aber auch ein zuverlässiger Halt unter Vermeidung des vorerwähnten Mikroschlupfes erreicht wird. Im weiteren soll die Vorrichtung einfach und kostengünstig herzustellen sein.

Diese Aufgabe wird gemäß der Erfindung mit den im kennzeichnenden Teil des Anspruches 1 angegebenen Merkmalen gelöst. Die Erfindung sieht also vor, das Gurtband innerhalb des Grundkörpers zweifach umzulenken, und zwar über Rollen, um die innerhalb der Vorrichtung entstehende Reibung beim Verstellen der Gurtbandlänge, also beim Durchziehen des Gurtbandes durch die Vorrichtung, möglichst gering zu halten. Die Rollen sind in ihrem Abstand zueinander festgelegt, so daß die dazwischen angeordnete Klemmeinrichtung stets eine definierte Gurtzuführung aufweist. Die Festlegung des Rollenabstandes erfolgt bevorzugt durch das Bedienteil selbst. Die Erfindung nutzt dann weiter den Umschlingungswinkel von etwa 180° des Gurtbandes um die jeweilige Rolle aus, um die sich bei Belastung an der Rollenachse einstellende Reaktionskraft auf die Klemmeinrichtung zu übertragen und zum sicheren Halten des Gurtbandes innerhalb der Vorrichtung zu nutzen. Um dies nicht nur bei Belastung, sondern auch in unbelastetem Zustand zu erreichen, ist zwischen Bedienteil und Grundkörper eine Federkraft wirksam, die das Bedienteil in bezug auf den Grundkörper in der Lage hält oder in die Lage bringt, in der die Klemmeinrichtung sperrend wirkt.

Weitere vorteilhafte Ausgestaltungen der Erfindung sind in den Unteransprüchen, der nachfolgenden Beschreibung sowie anhand des in der Zeichnung dargestellten Ausführungsbeispieles beschrieben.

Die Klemmeinrichtung wird gemäß der Erfindung in vorteilhafter Weise so aufgebaut, daß zwei Klemmkörper vorgesehen sind, zwischen denen das Gurtband einklemmbar ist. Von diesem beiden Klemmkörpern ist einer fest und der andere begrenzt bewegbar innerhalb des Grundkörpers angeordnet. Bevorzugt wird die Anordnung von Klemmkörpern und Rollen so gewählt, daß in Klemmstellung die Rollenachsen und die Klemmkörper in einer Ebene liegen, und zwar etwa in Durchlaufrichtung des Gurtbandes durch den Grundkörper. Unter Durchlaufrichtung im Sinne der Erfindung sind die Richtungen zu verstehen, in denen das Gurtband auf einer gedachten Linie zwischen Gurtbandeinlauf und Gurtbandauslauf der Vorrichtung läuft.

Um den bewegbaren Klemmkörper zum Zwecke des Festklemmens des Gurtbandes in seine Klemmstellung zu bewegen und umgekehrt, ist es zweckmäßig, eine geeignete Führung vorzusehen Dies kann in einfacher Weise durch eine entsprechende Kulissenführung im Grundkörper erreicht werden.

Um bei vergleichsweise geringem Bewegungsweg die Klemmeinrichtung soweit zu öffnen, daß dort ein nahezu berührungsfreier Durchgang für das Gurtband geschaffen wird, ist es von Vorteil, wenn die Kulissenführung im Grundkörper eine Schräge aufweist, so daß der bewegbare Klemmkörper schon nach kurzem Weg aus der Gurtbahn quasi ausgeschwenkt wird.

Die Klemmeinrichtung ist bevorzugt so ausgebildet, daß keine Verzahnung mit dem Gurtband erfolgt. Um einen zuverlässigen Halt auch gegen Mikroschlupf zu gewähren, ist es jedoch zweckmäßig, das Gurtband nicht nur durch Klemmwirkung, sondern auch durch zusätzliche Umlenkung in der Klemmeinrichtung zu halten, da dann die Reibung zwischen Gurtband und Klemmeinrichtung soweit ansteigt, daß trotz gerundeter und glatter Oberflächen ein sicherer Halt des Gurtbandes gegeben ist. Hierzu werden die Klemmkörper an ihren zueinanderweisenden Seiten bevorzugt stufenförmig ausgebildet, wobei die Stufen so ausgebildet und angeordnet sind, daß sie unter Eingliederung und Festlegung des Gurtbandes ineinandergreifen. Durch diese Stufen erfolgt eine zweifache Umlenkung um etwa 180°, die das Gurtband zuverlässig festhält.

Die erfindungsgemäße Vorrichtung kann fertigungstechnisch besonders günstig hergestellt werden, wenn der Grundkörper im Querschnitt im wesentlichen U-förmig ausgebildet ist, da dieser dann aus einem Blech geformt werden kann. Die Führungen für die Rollen und die Klemmkörper können durch entsprechende Ausnehmungen in den Schenkeln des U-förmigen Grundkörpers gebildet werden.

Zweckmäßigerweise wird dieser U-förmige Grundkörper nach oben hin von einem ebenfalls im Querschnitt im wesentlichen U-förmigen Körper umgeben, der zugleich das Bedienteil bildet und in dem Sacklöcher zur Aufnahme der freien Enden der Rollenachsen vorgesehen sind. Auf diese Weise werden über die Rollenachsen der Grundkörper und das Bedienteil formschlüssig miteinander verbunden und der Abstand der Rollen zueinander festgelegt.

Um die Umlenkkraft einer Rolle auf den bewegbaren Klemmkörper zu leiten ist es vorteilhaft, die entsprechende Rollenachse unmittelbar zur Anlage an den Klemmkörper zu bringen. Um hier eine zuverlässige Anlage zu gewährleisten wird die bewegbare Klemmplatte so ausgebildet, daß sie nicht nur in den Ausnehmungen in den Schenkeln des Grundkörpers geführt ist, sondern darüberhinaus bis in die Schenkel des Bedienteiles reicht, wo sie in entsprechenden Ausnehmungen liegt.

Wie bereits einleitend erwähnt sieht die Erfindung eine selbsttätige Klemmwirkung dadurch vor, daß zwischen dem Bedienteil und dem Grundkörper eine Federkraft wirkt. Auf diese Weise kann das freie Gurtbandende ohne weitere Vorkehrungen gegen die Kraft dieser Feder herausgezogen werden, wodurch sich die wirksame Länge des Gurtbandes verkürzt. Weitere Vorkehrungen sind nicht zu treffen. Lediglich für den Fall, daß die wirksame Länge wieder vergrößert werden soll, ist das Bedienteil gegenüber dem Grundkörper entgegen der Federkraft zu verschieben, um die Klemmeinrichtung zu öffnen. Hierzu ist es zweckmäßig, am Bedienteil einen entsprechenden Handgriff vorzusehen oder das Bedienteil als Griffteil auszubilden. Die zum selbsttätigen Klemmen erforderliche Federkraft wird zweckmäßigerweise durch eine oder mehrere zwischen den beiden Bauteilen vorgesehene Schraubenfeder bzw. Schraubenfedern bewirkt. Es versteht sich, daß für den Fall, daß eine selbsttätige Klemmwirkung nicht erforderlich oder nicht gewünscht ist, auf diese Federkraft verzichtet werden kann. Eine solche Konstellation ist beispielsweise in solchen Fällen denkbar, in denen kein Lastwechsel, sondern eine ständige Last an dem in die Vorrichtung einlaufenden Gurtband anliegt.

Die Erfindung ist nachfolgend anhand eines in der Zeichnung dargestellten Ausführungsbeispieles näher erläutert. Dieses Ausführungsbeispiel stellt eine bevorzugte Ausführungsform dar, welche die vorerwähnten Merkmale aufweist und daher eine besonders einfache Handhabung und sichere Funktion erlaubt. Es erfolgt einerseits ein schonender reibungsarmer Durchlauf des Gurtbandes und andererseits eine sichere und zuverlässige Klemmung desselben, ohne daß es zu dem gefürchteten Mikroschlupf kommt. Der Feststeller kann von der Lage her beliebig eingebaut werden und ist aus wenigen Bauteilen einfach herzustellen und zu montieren.

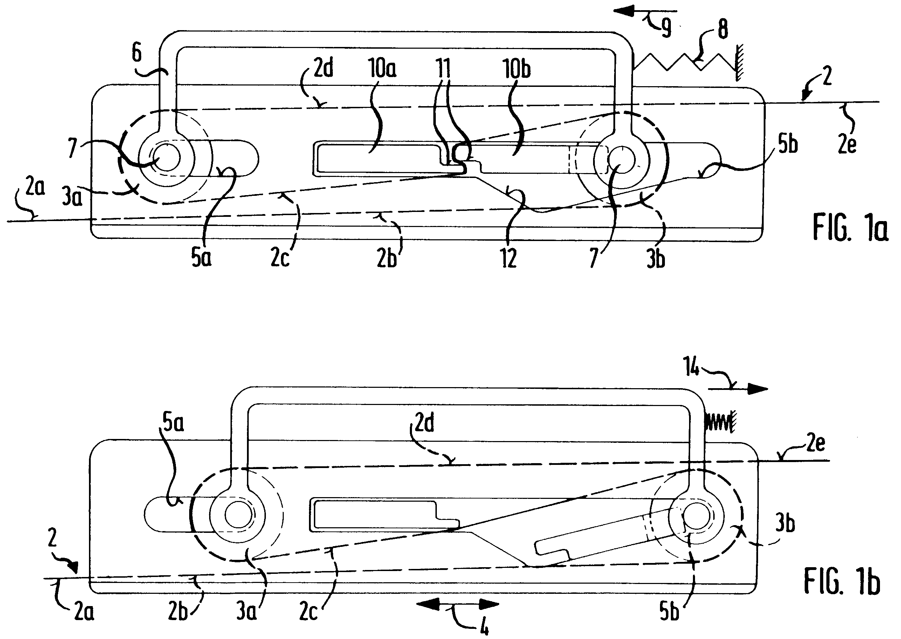

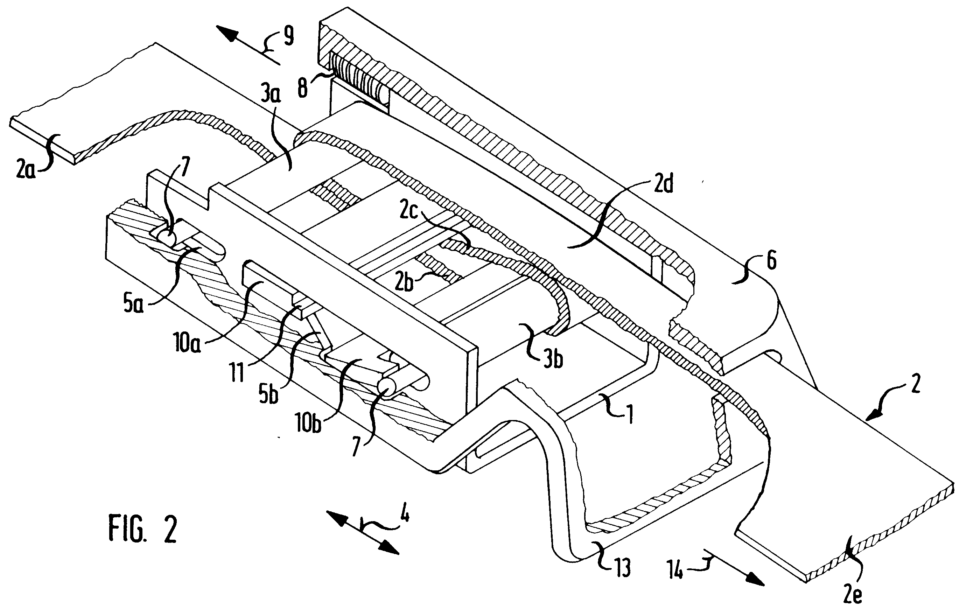

Anhand der Figuren 1a und 1b ist die Funktionsweise der erfindungsgemäßen Vorrichtung schematisch dargestellt. Fig. 1a zeigt die Vorrichtung mit geschlossener und Fig. 1b mit geöffneter Klemmeinrichtung. Die Fig. 2 zeigt eine teilweise geschnitten dargestellte perspektivische Darstellung eines Zentralverstellers mit Gurtband.

In den Figuren ist der Grundkörper des Zentralverstellers mit 1 gekennzeichnet. Das Gurtband ist mit der Bezugsziffer 2 bezeichnet, wobei mit 2a der in den Zentralversteller einlaufende Gurtbandabschnitt, mit 2b der innerhalb des Grundkörpers 1 verlaufende untere Gurtbandabschnitt, mit 2c der im Bereich zwischen Rollen 3a und 3b laufende mittlere Gurtbandabschnitt, mit 2d der im Grundkörper 1 verlaufende obere Gurtbandabschnitt und mit 2e der aus dem Grundkörper 1 auslaufende Gurtbandabschnitt, der das freie Ende des Gurtbandes bildet, bezeichnet sind.

Innerhalb des Grundkörpers 1 sind zwei Rollen, und zwar eine einlaufseitige Rolle 3a und eine auslaufseitige Rolle 3b vorgesehen, die in Durchlaufrichtung 4 begrenzt bewegbar innerhalb des Grundkörpers 1 gelagert sind. Hierzu sind im Grundkörper seitliche Ausnehmungen 5a und 5b vorgesehen. Die beiden Rollen 3a und 3b sind in ihrem Abstand zueinander festgelegt, und zwar durch ein Bedienteil 6, das in Richtung 4 begrenzt verschiebbar am Grundkörper 1 gelagert ist und in dem die freien Enden von Achsen 7 in entsprechenden Sacklöchern liegen. Um die Achsen 7 sind die Rollen 3a und 3b drehbar gelagert.

Zwischen Grundkörper 1 und dem Bedienteil 6 ist eine Druckfeder 8 angeordnet, welche das Bedienteil 6 in Richtung des Pfeiles 9, also zum auslaufseitigen Ende des Grundkörpers 1 hin Federkraft beaufschlagt.

Zwischen den Rollen 3a und 3b ist innerhalb des Grundkörpers 1 eine Klemmeinrichtung vorgesehen, die aus zwei plattenförmigen Klemmkörpern 10a und 10b besteht. Die Klemmkörper sind in Klemmstellung gesehen in der Ebene der Achsen 7 angeordnet. Sie weisen an den zueinander weisenden Schmalseiten jeweils eine Stufe 11 auf, wobei die Stufen 11 so angeordnet sind, daß beide Klemmkörper 10a und 10b in der in Fig. 1a dargestellten Art unter Eingliederung und Festklemmung des Gurtbandabschnittes 2c ineinandergreifen können. Diese Stufen 11 bewirken, daß neben der Einklemmung des dazwischen befindlichen Gurtbandes dieses einen zweifachen Richtungswechsel um jeweils etwa 180° vollzieht, wodurch eine enorme Reibung in diesem Bereich entsteht.

Der der Rolle 3a benachbarte Klemmkörper 10a liegt innerhalb der in Richtung zur Achse der Rolle 3a verlängert ausgebildeten Ausnehmung 5b des Grundkörpers 1 fest. Der bewegliche Klemmkörper 10b ragt über den Grundkörper 1 seitlich hinaus, wird jedoch innerhalb der Ausnehmung durch eine darin vorgesehene Kulisse geführt. Diese weist eine sich vom Boden des Grundkörpers 1 in Richtung auf den feststehenden Klemmkörper 10a gerichtete Schräge 12 auf. Der bewegliche Klemmkörper 10b ist seitlich über den Grundkörper 1 hinaus verlängert, so daß er bis in eine entsprechende Ausnehmung des Bedienteiles 6 reicht, derart, daß die Achse 7 der auslaufseitigen Rolle 3b an der Rückseite dieses Klemmkörpers anliegt und somit die auf diese Rolle 3b wirkende Umlenkkraft des Gurtbandes 2 auf den beweglichen Klemmkörper 10b und das Bedienteil 6 wirkt, und zwar in Richtung 9. Umgekehrt wirkt die Umlenkkraft an der einlaufseitigen Rolle 3a auf die Achse 7, die wiederum im Bedienteil 6 gelagert ist und dieses bei Kraftbeaufschlagung in Richtung 14 beaufschlagt.

Die Funktionsweise des beschriebenen Zentralverstellers ergibt sich anhand der Figuren 1a und 1b. Die Stellung gemäß Fig. 1a ist die Normalstellung, in der das Gurtband 2, insbesondere der mittlere Gurtbandabschnitt 2c innerhalb der Klemmkörper 10a und 10b derart festgehalten ist, daß kein Mikroschlupf auftritt. Diese Stellung wird durch die Kraft der Feder 8 selbsttätig erreicht. Bei Belastung des Gurtbandrückhaltesystemes wird vom einlaufenden Gurtbandabschnittes 2a her eine Zugkraft auf den Zentralversteller ausgeübt werden. Diese wird über den unteren Gurtbandabschnitt 2b über die auslaufseitige Rolle 3b bis zur Klemmeinrichtung geleitet, die diese Kraft aufnimmt. Zugleich entsteht an der Rolle 3b eine in Richtung 9 gerichtete Reaktionskraft, welche bewirkt, daß die Klemmkraft, die auf den beweglichen Klemmkörper 10b wirkt, sich weiter erhöht. Es steigt also mit wachsender Zugkraft am Gurtband 2 auch die Klemmkraft innerhalb der Klemmeinrichtung.

Um den Zentralversteller aus seiner Klemmstellung zu bringen, gibt es zwei Möglichkeiten, entweder durch Zug am freien Gurtbandabschnitt 2e oder aber durch Bewegung des Bedienteiles 6 in Richtung 14 entgegen der Kraft der Feder 8. Während bei letzterer Bewegung die Klemmeinrichtung 10a, 10b unmittelbar geöffnet wird, geschieht dies beim Zug am freien Gurtbandabschnitt 2e mittelbar darüber, daß an der einlaufseitigen Rolle 3a durch die Zugkraft eine Reaktionskraft in Richtung 14 entsteht, die dann das Bedienteil 6 in diese Richtung verschiebt und ebenfalls die Klemmvorrichtung öffnet. Während durch Zug am freien Gurtbandabschnitt 2e die wirksame Gurtbandlänge des Gurtbandrückhaltesystemes verkürzt wird, kann diese durch Schieben des Bedienteiles in Richtung 14 und Zug am einlaufenden Gurtbandabschnitt 2a verlängert werden. In beiden Fällen kehrt der Zentralversteller selbsttätig in die anhand von Fig. 1a dargestellte und vorbeschriebene Klemmstellung zurück.

Wie anhand der Fig. 1b erkenntlich, wandert beim Öffnen der Klemmeinrichtung der bewegliche Klemmkörper 10b nicht direkt in Richtung 14, sondern auf einer Bahn, welche durch die Schräge 12 in der Ausnehmung 5b im Grundkörper 1 bestimmt ist. Diese Schräge 12 führt dazu, daß der Klemmkörper 10b bei seiner Bewegung in die geöffnete Stellung (siehe Fig. 1b) mit seiner zum Gurtbandabschnitt 2c gerichteten Stirnseite nicht nur in Richtung 14, sondern auch nach unten wandert bzw. beim Schließen in Gegenrichtung bewegt wird. Hierdurch wird beim Öffnen erreicht, daß bei vergleichsweise kleinem Verschiebeweg der Klemmkörper außer Eingriff mit dem Gurtband 2 kommt, so daß dieses bereits kurz nach dem Öffnen nahezu reibungsfrei durch den Versteller gleiten kann. In umgekehrter Richtung sorgt diese Schräge dafür, daß sich auch bei geringer Federkraft der Feder 8 der Gurtbandabschnitt 2c im Bereich der Stufen 11 in den durch diese Stufen vorgegebenen Verlauf legt und somit wirksamen Schutz gegen Mikroschlupf erreicht wird.

Der Grundkörper 1 ist zur Befestigung beispielsweise an der Sitzschale eines Kindersitzes vorgesehen. Er ist bei der Ausführung nach Fig. 2 im Querschnitt etwa U-förmig ausgebildet, wobei die Ausnehmungen 5a und 5b im den Schenkeln des U's liegen. Ein solches Bauteil kann kostengünstig durch ein gestanztes und entsprechend verformtes Blechteil gebildet werden. Darüberliegend ebenfalls im wesentlichen U-förmig ist das Bedienteil 6 angeordnet, das den Grundkörper 1 seiner Oberseite sowie den beiden Schenkelseiten umgreift und damit nahezu vollständig nach außen abschließt. Die Feder 8 ist als Schraubenfeder ausgebildet. Am Bedienteil 6 ist auslaufseitig ein Griff 13 vorgesehen.

## Patentansprüche

1. Vorrichtung zum verstellbaren Festlegen eines Gurtbandes (2) mit einem zur ortsfesten Anbringung vorgesehenen Grundkörper (1), an dessen einer Seite das festzulegende Gurtband (2a) einläuft und an dessen davon abgewandter Gegenseite ein freies Gurtbandende (2e) ausläuft, und mit einer innerhalb des Grundkörpers (1) angeordneten Klemmeinrichtung (10a, 11, 10b) zum Festlegen des Gurtbandes, dadurch gekennzeichnet,
- daß innerhalb des Grundkörpers (1) zwei das Gurtband (2) jeweils um etwa 180° umlenkende Rollen (3a, 3b) drehbar und in Durchlaufrichtung (4) des Gurtbandes (2) begrenzt verschiebbar und in konstantem Abstand zueinander gelagert sind,
- daß die Klemmeinrichtung (10a, 11, 10b) im Bereich zwischen den Rollen (3a, 3b) angeordnet und zur Beaufschlagung des zwischen den Rollen laufenden Teiles (2c) des Gurtbandes (2) vorgesehen ist,
- daß die Klemmeinrichtung (10a, 11, 10b) von der an einer Rolle (3b) entstehenden Umlenkkraft beaufschlagt ist und
- daß am Grundkörper (1) ein Bedienteil (6) in Durchlaufrichtung (4) des Gurtbandes (2) begrenzt verschiebbar angeordnet und zur selbsttätigen Festlegung des Gurtbandes (2) federkraftbeaufschlagt ist.

2. Vorrichtung nach Anspruch 1, dadurch gekennzeichnet, daß die Klemmeinrichtung zwei Klemmkörper (10a, 10b) aufweist, von denen einer fest und der andere begrenzt bewegbar innerhalb des Grundkörpers (1) angeordnet ist.

3. Vorrichtung nach Anspruch 1 oder 2, dadurch gekennzeichnet, daß die Bewegung des bewegbar gelagerten Klemmkörpers (10b) durch eine Kulissenführung (5b) im Grundkörper (1) bestimmt ist.

4. Vorrichtung nach einem der vorhergehenden Ansprüche, dadurch gekennzeichnet, daß die Kulissenführung (5b) im Grundkörper (1) bezogen auf die Durchlaufrichtung (4) des Gurtbandes (2) eine Schräge (12) aufweist.

5. Vorrichtung nach einem der vorhergehenden Ansprüche, dadurch gekennzeichnet, daß die Klemmkörper (10a, 10b) an ihren zueinanderweisenden Seiten stufenförmig derart ausgebildet sind, daß die Stufen (11) in Klemmstellung unter Eingliederung und Festlegung des Gurtbandes (2) ineinandergreifen.

6. Vorrichtung nach einem der vorhergehenden Ansprüche, dadurch gekennzeichnet, daß der Grundkörper (1) im Querschnitt im wesentlichen U-förmig ausgebildet ist, wobei die Führungen für die Rollen (3a, 3b) und die Klemmkörper (10a, 10b) durch entsprechende Ausnehmungen (5a, 5b) in den Schenkeln gebildet sind.

7. Vorrichtung nach einem der vorhergehenden Ansprüche, dadurch gekennzeichnet, daß der Abstand der Rollen (3a, 3b) durch das Bedienteil (6) festgelegt ist.

8. Vorrichtung nach einem der vorhergehenden Ansprüche, dadurch gekennzeichnet, daß das Bedienteil (6) im Querschnitt im wesentlichen U-förmig ausgebildet ist und den Grundkörper (1) zur Bildung eines im wesentlichen geschlossenen Gebildes an drei Seiten umgreift, wobei in den Schenkeln des Bedienteiles (6) Ausnehmungen, vorzugsweise Sacklöcher, zur Aufnahme der freien Enden der Rollenachsen (7) vorgesehen sind.

9. Vorrichtung nach einem der vorhergehenden Ansprüche, dadurch gekennzeichnet, daß die freien Enden des bewegbaren Klemmkörpers (10b) in Ausnehmungen in den Schenkeln des Bedienteiles (6) schwenkbeweglich liegen.

10. Vorrichtung nach einem der vorhergehenden Ansprüche, dadurch gekennzeichnet, daß am Bedienteil (6) ein Handgriff (13) vorgesehen ist und daß zwischen dem Bedienteil (6) und dem Grundkörper (1) eine Schraubenfeder (8) vorgesehen ist.

## Claims

1. A device for the adjustable fastening of a belt strap (2) with a base body (1) for the stationary mounting and on whose one side the belt strap (2a) to be fastened runs in and whose opposite side distant from this a free belt strap end (2a) runs out, and with a clamping means (10a, 11, 10b) arranged within the base body (1) for fastening the belt strap, characterised in
- that within the base body (1) two rollers (3a, 3b) in each case turning the belt strap (2) about approximately 180° are mounted rotatably, mounted displaceably in a limited manner in the pass through direction (4) of the belt strap (2) and mounted at a constant distance to one another,
- that the clamping means (10a, 11, 10b) is arranged in the region between the rollers (3a, 3b) and is provided for the impingement of the part (2c) of the belt strap (2) running between the rollers,
- that the clamping means (10a, 11, 10b) is impinged by the turning force arising at one roller (3b) and
- that at the base body (1) an operating part (6) is displaceably arranged in a limited manner in the pass through direction (4) of the belt strap (2) and is impinged by spring force for the automatic fastening of the belt strap (2).

2. A device according to claim 1, characterised in that the clamping means comprises two clamping bodies (10a, 10b) of which one is arranged rigidly and the other movably in a limited manner within the base body (1).

3. A device according to one of the preceding claims, characterised in that the movement of the movably mounted clamping body (10b) is determined by a connecting link guide (5b) (5b) in the base body (1).

4. A device according to one of the preceding claims, characterised in that the connecting link guide (5b) in the base body (1) comprises an inclination (12) with regard to the pass through direction (4) of the belt strap (2).

5. A device according to one of the preceding claims, characterised in that the clamping bodies (10a, 10b) at their sides facing one another are formed step-shaped in a manner such that in the clamping position the steps (11) engage into one another with the incorporating and fastening of the belt strap (2).

6. A device according to one of the preceding claims, characterised in that the base body in cross section is formed essentially U-shaped, wherein the guides for the rollers (3a, 3b) and the clamping bodies (10a, 10b) are formed by corresponding recesses (5a, 5b) in the arms.

7. A device according to one of the preceding claims, characterised in that the distance of the rollers (3a, 3b) is fixed by the operating part (6).

8. A device according to one of the preceding claims, characterised in that the operating part (6) in cross section is formed essentially U-shaped and encompasses the base body (1) on three sides for forming an essentially closed formation, wherein in the arms of the operating part (6) recesses, preferably pocket holes, are provided for receiving the free ends of the roller axes (7).

9. A device according to one of the preceding claims, characterised in that the free ends of the movable clamping body (10b) lie pivotingly movable in recesses in the arms of the operating part (6).

10. A device according to one of the preceding claims, characterised in that at the operating part (6) a handle (13) is provided and that between the operating part (6) and the base body (1) a helical spring (8) is provided.

## Revendications

1. Dispositif destiné à immobiliser de manière réglable, une sangle (2), comprenant un corps de base (1) prévu pour être placé en position fixe, sur un côté duquel pénètre la sangle (2a) à immobiliser, et sur le côté opposé duquel, éloigné du précédent, sort une extrémité libre (2e) de la sangle, l'ensemble comprenant également un mécanisme de serrage (10a, 11, 10b) disposé à l'intérieur du corps de base (1) et destiné à immobiliser la sangle, **caracterisé**
- en ce qu'à l'intérieur du corps de base (1) sont montés en rotation deux galets (3a, 3b), qui réalisent chacun un renvoi d'environ 180° de la sangle (2), peuvent coulisser de manière limitée dans la direction de passage (4) de la sangle (2), et sont maintenus à distance constante l'un de l'autre,
- en ce que le mécanisme de serrage (10,. 11, 10b) est disposé dans la zone entre les galets (3a, 3b) et est prévu pour solliciter la partie (2c) de la sangle (2) circulant entre les galets.
- en ce que le mécanisme de serrage (10a, 11, 10b) est sollicité par la force de renvoi engendrée au niveau d'un galet (3b), et
- en ce que sur le corps de base (1) est disposée une pièce de manoeuvre (6) qui peut coulisser de manière limitée dans la direction de passage (4) de la sangle (2), et qui est sollicitée par une force de ressort pour l'immobilisation automatique de la sangle (2).

2. Dispositif selon la revendication 1, **caractérisé** en ce que le mécanisme de serrage comprend deux corps de serrage (10a, 10b) dont l'un est disposé de manière fixe à l'intérieur du corps de base (1) et l'autre de manière à être mobile de façon limitée à l'intérieur du corps de base (1).

3. Dispositif selon la revendication 1 ou 2, **caractérisé** en ce que le mouvement du corps de serrage (10b) monté de manière mobile, est déterminé par un guidage à coulisse (5b) dans le corps de base (1).

4. Dispositif selon l'une des revendications précédentes. **caractérisé** en ce que le guidage à coulisse (5b) dans le corps de base (1) présente un plan incliné (12) en se référant à la direction de passage (4) de la sangle (2).

5. Dispositif selon l'une des revendications précédentes, **caractérisé** en ce que les corps de serrage (10a, 10b), sur leurs côtés dirigés l'un vers l'autre, sont réalisés en forme de gradin de manière telle, que les gradins (11), en position de serrage, viennent en prise réciproque en enserrant et en immobilisant la sangle (2).

6. Dispositif selon l'une des revendications précédentes. **caractérisé** en ce que le corps de base (1) présente, en section transversale, sensiblement une forme de U, les guidages pour les galets (3a, 3b) et les corps de serrage (10a, 10b) étant formés par des évidements correspondants (5a, 5b) dans les ailes.

7. Dispositif selon l'une des revendications précédentes, **caractérisé** en ce que la distance entre les galets (3a, 3b) est déterminée par la pièce de manoeuvre (6).

8. Dispositif selon l'une des revendications précédentes, **caractérisé** en ce que la pièce de manoeuvre (6) présente, en section transversaie, sensiblement une forme de U, et enserre le corps de base (1) sur trois côtés en vue de former un objet sensiblement fermé, des évidements, de préférence des trous borgnes, étant prévus dans les ailes de la pièce de manoeuvre (6), pour recevoir les extrémités libres des axes de galet (7).

9. Dispositif selon l'une des revendications précédentes, **caractérisé** en ce que les extrémités libres du corps de serrage mobile (10b) sont logées de manière mobiles en pivotement dans des évidements dans les ailes de la pièce de manoeuvre (6).

10. Dispositif selon l'une des revendications précédentes, **caractérisé** en ce que sur la pièce de manoeuvre (6) est prévue une poignée (13), et en ce qu'un ressort hélicoïdal (8) est prévu entre la pièce de manoeuvre (6) et le corps de base (1).
